# EUROPÄISCHE PATENTSCHRIFT

(11) **EP 1 016 304 B1**
(45) Veröffentlichungstag und Bekanntmachung des Hinweises auf die Patenterteilung: **10.07.2002**
(21) Anmeldenummer: 98952560.5
(22) Anmeldetag: 10.09.1998
(51) Int. Cl.: H04Q 7/38

(54) **VERFAHREN UND ANORDNUNG ZUM ABHÖREN VON KOMMUNIKATIONSVERBINDUNGEN IN EINEM MOBILFUNKSYSTEM**
METHOD AND DEVICE FOR TAPPING COMMUNICATION LINKS IN A MOBILE RADIO TELEPHONE SYSTEM
PROCEDE ET CONFIGURATION PERMETTANT L'ECOUTE CLANDESTINE DE COMMUNICATIONS DANS UN SYSTEME TELEPHONIQUE MOBILE

(30) Priorität: 18.09.1997 DE 19741216
(43) Veröffentlichungstag der Anmeldung: 05.07.2000
(73) Patentinhaber: SIEMENS AKTIENGESELLSCHAFT, 80333 München (DE)
(72) Erfinder: GABE, Axel, D-86150 Augsburg (DE); GROHS, Jürgen, D-82031 Grünwald (DE); IBERL, Robert, D-80689 München (DE); TSCHORN, Hans-Jürgen, D-82152 Planegg (DE)
(86) Internationale Anmeldenummer: DE9802685
(87) Internationale Veröffentlichungsnummer: WO9914970

(56) Entgegenhaltungen:
- WO-A-97/21296
- THOROGOOD R R: "LAW ENFORCEMENT AND MOBILE COMMUNICATIONS" IEE COLLOQUIUM ON MOBILE COMMUNICATIONS TOWARDS THE YEAR 2000,1996, pages 11/1-11/5, XP000602804

## Beschreibung

Die Erfindung betrifft ein Verfahren und eine Anordnung zum Abhören einer Kommunikationsverbindung in einem Mobilfunksystem, insbesondere in einem satellitengestützten Mobilfunksystem.

In terrestrischen Mobilfunksystemen, wie beispielsweise dem GSM-Mobilfunksystem (Global System for Mobile Communications) sind Verfahren und Anordnungen bekannt, mittels derer über Kommunikationsverbindungen übertragene Informationen abgehört und aufgezeichnet werden können. Aufgrund einer länderweise ausgestalteten Netzstruktur und damit der Trennung der Mobilfunknetze verfügt jedes Land über Hoheitsrechte, so daß beispielsweise ein französischer Teilnehmer nur in dem französischen Mobilfunksystem abgehört werden kann. Eine Unterscheidung von Abhörberechtigungen nach Regionen eines Landes ist mit diesen Verfahren jedoch nicht möglich.

Mit dem zukünftigen Aufbau von satellitengestützten Mobilfunksystemen, wie beispielsweise IRIDIUM, wie es unter anderem aus dem Artikel von J.Huber "Zukunftsmarkt satellitengestützte Mobilkommunikation", telcom report 17 (1994) Heft 5, S. 180 bis 183, bekannt ist, ist zudem keine direkte Wahrung der Hoheitsrechte der einzelnen Länder möglich, da es beispielsweise nur eine Satelliten-Mobilvermittlungsstelle für alle Teilnehmer in Mitteleuropa gibt. In dieser Satelliten-Mobilvermittlungsstelle werden Kommunikationsverbindungen aller sich in dem Ausleuchtungsbereich eines oder mehrerer Satelliten, die mit der Satelliten-Mobilvermittlungsstelle über eine Bodenstation in Funkverbindung stehen, befindlichen Teilnehmer vermittelt bzw. der Übergang zu weiteren terrestrischen Festnetzen oder Mobilfunknetzen hergestellt.

Der Erfindung liegt die Aufgabe zugrunde, ein Verfahren sowie eine Anordnung anzugeben, die eine Wahrung der Hoheitsrechte von Regionen bzw. Ländern zum Abhören von Kommunikationsverbindungen von Teilnehmern eines Mobilfunksystems bzw. eines Satelliten-Mobilfunksystems sicherstellt.

Diese Aufgabe wird gemäß der Erfindung durch die Merkmale der unabhängigen Patentansprüche hinsichtlich eines Verfahrens und einer Anordnung gelöst. Vorteilhafte Ausgestaltungen der Erfindung sind in jeweiligen Unteransprüchen angegeben.

Erfindungsgemäß weist das Mobilfunksystem zumindest eine Mobilvermittlungsstelle, die mit weiteren Mobilvermittlungsstellen vernetzt ist und/oder einen Zugang zu anderen Kommunikationsnetzen ermöglicht, zumindest eine Einrichtung zur Zuteilung funktechnischer Ressourcen, die innerhalb eines geographischen Teilgebietes funktechnische Ressourcen zu Kommunikationsverbindungen zuweist, sowie zumindest eine mit der Einrichtung zur Zuteilung funktechnischer Ressourcen verbundene Basisstation zum Senden und Empfangen von Informationen über eine Kommunikationsverbindung zu/von zumindest einer ersten Mobilstation eines Mobilteilnehmers auf.

In der Mobilvermittlungsstelle wird erfindungsgemäß eine Korrespondenztabelle gespeichert, in der jeweils einer Berechtigungsorganisationskennung einer regionalen, nationalen oder internationalen Berechtigungsorganisation zumindest eine Bereichskennung eines geographischen Teilgebietetes zugeordnet wird. Weiterhin wird in der Datenbasis eine Abhördatei gespeichert, in der eine internationale Mobilteilnehmerrufnummer des durch eine oder mehrere Berechtigungsorganisationen zur Überwachung bestimmten Mobilteilnehmers eingetragen wird. Bei einem Verbindungsaufbauversuch von/zu der ersten Mobilstation des Mobilteilnehmers wird anhand der Korrespondenztabelle ermittelt, ob die jeweiligen Berechtigungsorganisationen in dem durch die Bereichskennung identifizierten geographischen Teilgebiet, in dem sich der Mobilteilnehmer aufhält, zum Abhören der Kommunikationsverbindung berechtigt sind. Liegt die Berechtigung vor, so werden die Berechtigungsorganisationskennungen der internationalen Mobilteilnehmerrufnummer in der Abhördatei zugeordnet und die von der ersten Mobilstation über die Kommunikationsverbindung gesendeten und/oder empfangenen Informationen von zumindest einer Aufzeichnungseinrichtung ausfgezeichnet.

Die erfindungsgemäße Ausgestaltung ermöglicht vorteilhaft, daß nur jeweils die Berechtigungsorganisationen die Kommunikationsverbindung des Mobiiteilnehmers abhören dürfen, die für den aktuellen Aufenthaltsort des Mobilteilnehmers eine Berechtigung besitzen. Hierdurch werden regionale und staatliche Hoheitsgebietsrechte gewahrt und ein unerlaubtes Abhören unterbunden.

In ersten alternativen Ausgestaltungen der Erfindung werden die aufgezeichneten Informationen nach Auslösen der Kommunikationsverbindung von der Mobilvermittlungsstelle anhand der Berechtigungsorganisationskennungen zu den jeweiligen nationalen oder internationalen Berechtigungsorganisationen vermittelt und übertragen, oder die Informationen werden direkt zu den jeweiligen Berechtigungsorganisationen umgelenkt und dort in der jeweils verwirklichten Aufzeichnungseinrichtung aufgezeichnet. Die erste alternative Ausgestaltung besitzt dabei den Vorteil, daß die Informationen zentral in der Mobilvermittlungsstelle aufgezeichnet werden, wodurch der Zeitaufwand für die Vermittlung zu den Berechtigungsorganisationen wegfällt und somit für den abzuhörenden Mobilteilnehmer keinerlei Unterschied zu einem normalen Verbindungsaufbau spürbar ist. Der Vorteil der zweiten Ausgestaltung ist darin zu sehen, daß in der Mobilvermittlungsstelle keine Informationen aufgezeichnet werden und somit gegen unbefugten Zugriff durch nichtberechtigte Dritte gesichert sind.

Für die Initialisierung und Verwaltung der Parameter in der Korrespondenztabelle und in der Abhördatei wird in einer weiteren Ausgestaltung der Erfindung ein mit der Mobilvermittlungsstelle verbundenes Abhörverwaltungszentrum eingesetzt. Der Einsatz eines derartigen Abhörverwaltungszentrums liegt in der Administation aller Parameter, die unmittelbar für den Vorgang des Abhörens wesentlich sind. Dazu gehört unter anderem die Zuordnung der geographischen Teilgebiete zu den Berechtigungsorganisationen und der Eintrag der internationalen Mobilteilnehmerrufnummer in die Abhördatei. Das Abhörverwaltungszentrum kann gegebenenfalls zusätzlich mit den Berechtigungsorganisationen verbunden sein, so daß diese nur mit diesem kommunizieren und direkten Einfluß auf die Administration der Parameter nehmen können. Auch die Ermittlung der Berechtigung zum Abhören kann von dem Abhörverwaltungzentrum initialisiert werden.

Die Ermittlung der Berechtigung kann in weiteren Ausgestaltungen abhängig vom Aufenthaltsort des Mobilteilnehmers, d.h. die Berechtigung wird erneut ermittelt, wenn der Mobilteilnehmer in ein anderes geographisches Teilgebiet eintritt, oder periodisch in vordefinierten Zeitintervallen erfolgen. Die aufenthaltsortabhängige Ermittlung bietet vorteilhaft besonders bei quasi-stationären Mobilteilnehmern einen reduzierten Bearbeitungsaufwand sowie eine geringere Signalisierungslast zwischen dem Abhörverwaltungszentrum und der Mobilvermittlungsstelle, und stellt dabei die Einhaltung der staatlichen Hoheitsrechte sicher.

In einer weiteren Weiterbildung der Erfingung wird zusätzlich in der Datenbasis zumindest ein Abhörreport für die in der Abhördatei eingetragene internationale Mobilteilnehmerrufnummer gespeichert. In diesem Abhörreport werden teilnehmer- und verbindungsrelevante Informationen des Mobilteilnehmers wie beispielsweise Teilnehmeridentität, Datum und Uhrzeit, Verbindungstyp (abgehende (MOC) oder ankommende (MTC) Mobilfunkverbindung) oder auch die Rufnummer beim Dienst "Anrufumlenkung sofort" (CFU - Call Forwarding Unconditional), protokolliert und gespeichert.

Der Abhörreport wird gemäß einer weiteren Ausgestaltung der Erfindung entweder an das Abhörverwaltungszentrum übertragen, dort in einer Speichereinrichtung gespeichert und zu den jeweiligen Berechtigungsorganisationen übertragen und dort jeweils in einer Speichereinrichtung gespeichert, oder der Abhörreport wird zu den jeweiligen Berechtigungsorganisationen übertragen und dort jeweils in einer Speichereinrichtung gespeichert.

In weiteren Ausgestaltungen der Erfindung ist eine Teilnehmerdatenbasis mit der Mobilvermittlungsstelle verbunden, in der unter anderem die Bereichskennung des geographischen Teilgebietes, in dem sich der Mobilteilnehmer aufhält, gespeichert wird und somit zur Ermittlung der Berechtigung zur Verfügung steht.

Für den Fall, daß dem Mobilteilnehmer keine Bereichskennung direkt zugeordnet werden kann, wie beispielsweise beim Dienst "Anrufumlenkung sofort" (CFU), wird in einer weiteren Ausgestaltung die Berechtigung zum Abhören der Kommunikationsverbindung für die zuletzt bekannte Bereichskennung ermittelt. Mit dieser Ausgestaltung wird sichergestellt, daß sich der zu überwachende Mobilteilnehmer nicht dem Abhören durch einfaches Anrufumlenken entziehen kann.

Gemäß einer weiteren Ausgestaltung der Erfindung ist das Mobilfunksystem als ein Satelliten-Mobilfunksystem ausgestaltet, wobei die Mobilvermittlungsstellen als Satelliten-Mobilvermittlungsstellen ausgestaltet sind, die über jeweils zumindest eine Bodenstation Funksignale zu/von einem Satelliten senden und empfangen, wobei der Satellit ein geographisches Gebiet mit funktechnischen Ressourcen versorgt. Das geographische Gebiet kann dabei beispielsweise aus den Hoheitsgebieten mehrerer Länder bestehen und eine große Anzahl geographischer Teilgebiete umfassen.

Die nachfolgende Beschreibung mehrerer Ausführungsbeispiele des erfindungsgemäßen Verfahrens und der erfindungsgemäßen Anordnung besitzt lediglich beispielhaften Charakter. Die beschriebenen Merkmale sind nicht zwingend in der dargestellten Art zur Verwirklichung des angestrebten Erfolges erforderlich.

Die Ausführungsbeispiele der Erfindung werden anhand der beigefügten Zeichnung erläutert.

Es zeigen:
- FIG 1: ein Blockschaltbild eines Teils eines Mobilfunksystems,
- FIG 2: eine Struktur einer Korrespondenztabelle,
- FIG 3: eine Struktur einer Abhördatei,
- FIG 4: ein Ablaufdiagramm eines erfindungsgemäßen Verfahrens zum Abhören einer Kommunikationsverbindung,
- FIG 5: ein Blockschaltbild eines Teils eines satellitengestützten Mobilfunksystems, und
- FIG 6: eine Darstellung eines geographischen Gebietes mit einer Unterteilung in durch Bereichskennungen gekennzeichnete geographische Teilgebiete.

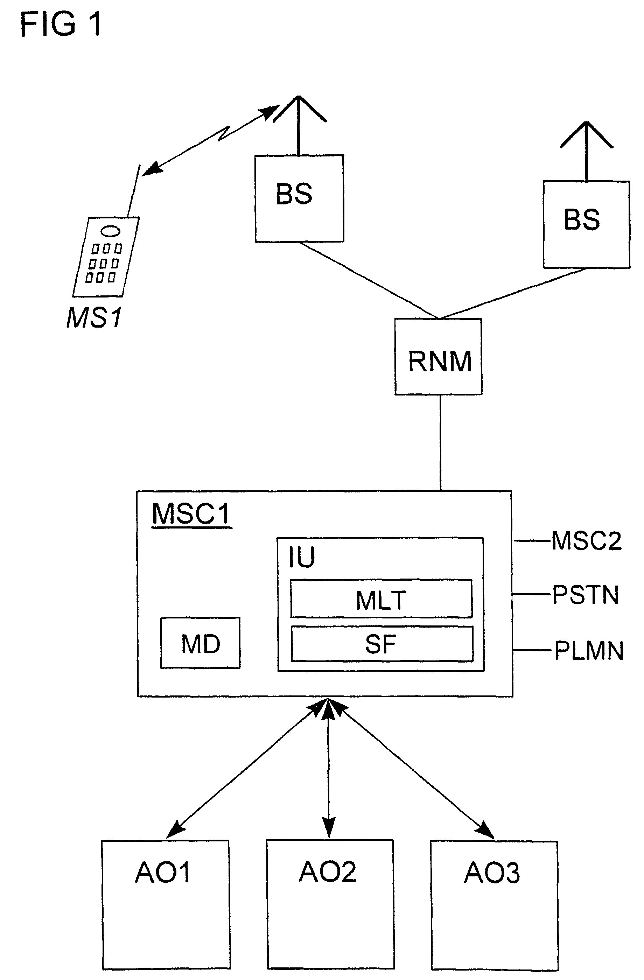

Der in der FIG 1 dargestellte Teil eines Mobilfunksystems entspricht dem bekannten GSM-Mobilfunksystem und weist eine Mobilvermittlungsstelle MSC1 auf, die mit einer weiteren Mobilvermittlungsstelle MSC2 vernetzt ist und/oder den Zugang zu terrestrischen Mobilfunknetzen PLMN und öffentlichen und privaten Fernsprechnetzen PSTN herstellt. Die Mobilvermittlungsstelle MSC1 ist mit einer Einrichtung RNM zur Zuteilung funktechnischer Ressourcen verbunden, die wiederum über Leitungen oder Richtfunkstrecken mit einer oder mehreren Basisstationen BS verbunden ist. Die Basisstationen BS versorgen über Antenneneinrichtungen jeweils eine Funkzone, auch Funkzelle genannt, mit funktechnischen Ressourcen. Die Einrichtung RNM zur Zuteilung funktechnischer Ressourcen kontrolliert somit mehrere Funkzonen, die zusammengenommen beispielsweise ein geographisches Teilgebiet, dem innerhalb des Mobilfunksystems eine bestimmte Bereichskennung LAC1... zugeordnet wird.

Eine erste Mobilstation MS1 eines Mobilteilnehmers MSUB1, der sich in der durch eine Basisstation BS versorgten Funkzone des geographischen Teilgebietes aufhält, kann eine Kommunikationsverbindung zu einem weiteren Teilnehmer, beispielsweise eines Festnetzes oder eines anderen Mobilfunknetzes aufbauen und auslösen. Ein von der ersten Mobilstation MS1 initiierter Verbindungsaufbau wird in der Mobilvermittlungsstelle MSC1 zu dem weiteren Teilnehmer vermittelt und Informationen wie beispielsweise Sprache oder Daten über die aufgebaute Kommunikationsverbindung übertragen. Anhand der Bereichskennung LAC1... kann der ersten Mobilstation MS1 jederzeit ein aktueller Aufenthaltsort in dem Mobilfunksystem zugeordnet werden, welches beispielsweise für das Paging bei einem Verbindungsaufbau zu der ersten Mobilstation MS1 verwendet wird.

Mit der Mobilvermittlungsstelle MSC1 sind mehrere regionale, nationale oder auch internationale Berechtigungsorganisationen AO1, AO2 und AO3, wie beispielsweise das Bundeskriminalamt, der französische Geheimdienst oder das CIA, verbunden. Die Berechtigungsorganisationen AO1, AO2 und AO3 besitzen jeweils eine geographische, beispielsweise durch Regions- bzw. Landesgrenzen eingeschränkte, Berechtigung, den Mobilteilnehmer MSUB1 zur Überwachung zu bestimmen und die übertragenen Informationen über die Kommunikationsverbindungen von/zu dem Mobilteilnehmer MSUB1 abzuhören und in einer Aufzeichnungseinrichtung MD in der Mobilvermittlungsstelle MSC1 aufzuzeichnen.

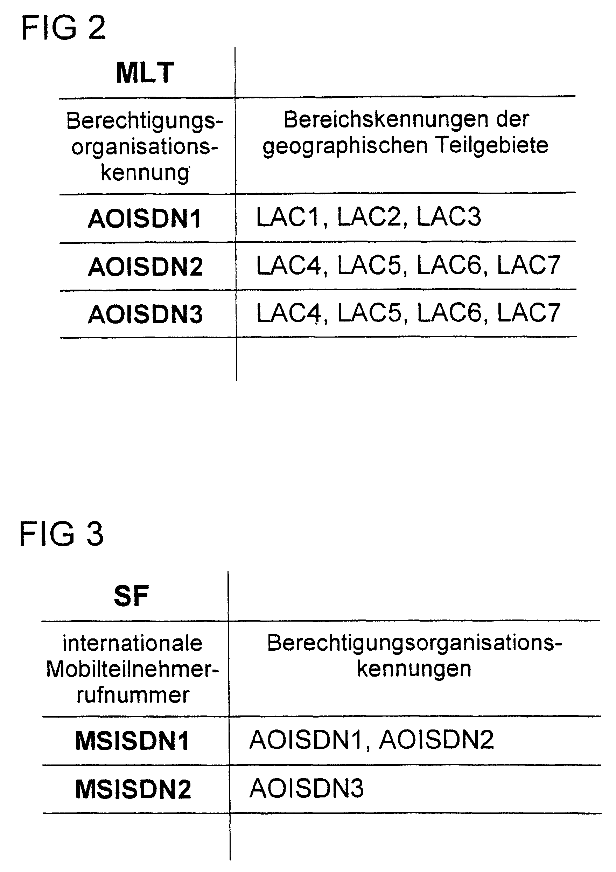

In der Mobilvermittlungsstelle MSC1 ist weiterhin eine Datenbasis IU verwirklicht, in der eine Korrespondenztabelle MLT sowie eine Abhördatei SF gespeichert sind. In der Korrespondenztabelle MLT, deren Struktur beispielhaft in der FIG 2 dargestellt ist, sind die Berechtigungsorganisationen AO1, AO2 und AO3 in der linken Spalte durch ihnen zugeordnete Berechtigungsorganisationskennungen AOISDN1, AOISDN2 und AOISDN3 gekennzeichnet. Bei den Berechtigungsorganisationskennungen AOISDN1, AOISDN2 und AOISDN3 handelt es sich beispielsweise um internationale Rufnummern zur Vermittlung und Übertragung der aufgezeichneten Informationen zu den jeweiligen Berechtigungsorganisationen AO1, AO2 und AO3. Den Berechtigungsorganisationskennungen AOISDN1, AOISDN2 und AOISDN3 sind in der rechten Spalte der Korrespondenztabelle MLT jeweils mehrere Bereichskennungen LAC1... der geographischen Teilbereiche, in denen die jeweilige Berechtigungsorganisationen AO1, AO2 und AO3 zur Überwachung berechtigt sind, gegenübergestellt.

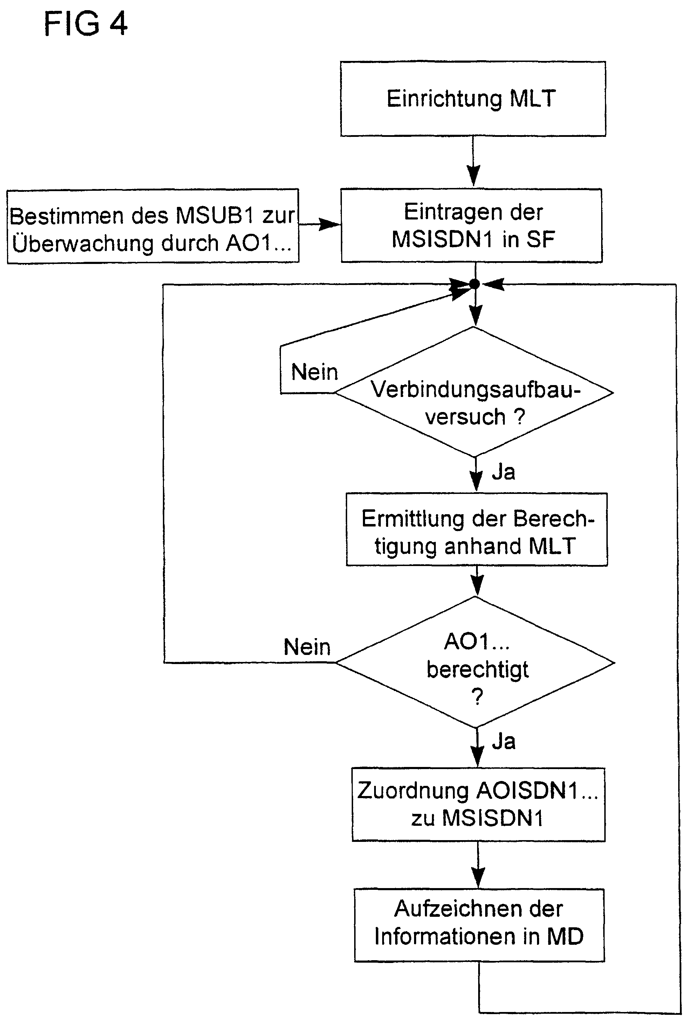

In der gespeicherten Abhördatei SF, deren Struktur beispielhaft in der FIG 3 dargestellt ist, wird in der linken Spalte die internationale Mobilteilnehmerrufnummer MSISDN1 des durch eine oder mehrere Berechtigungsorganisationen AO1, AO2 und AO3 zur Überwachung bestimmten Mobilteilnehmers MSUB1 eingetragen. In die rechte Spalte der Abhördatei SF wird der internationalen Mobilteilnehmerrufnummer MSISDN1 die Berechtigungsorganisationskennungen AOISDN1, AOISDN2 der für den aktuellen Aufenthaltsort des Mobilteilnehmers MSUB1 berechtigten Berechtigungsorganisationen AO1 und AO2 gegenübergestellt. Die Ermittlung der Berechtigung erfolgt nach dem Ablaufdiagramms der in der FIG 4 dargestellten Prozedur.

Grundlage für die in der FIG 4 dargestellten Prozedur der Ermittlung der Berechtigung ist die Einrichtung der Korrespondenztabelle MLT, d.h. die Zuordnung der geographischen Teilgebiete LAC1... zu den Berechtigungsorganisationskennungen AOISDN1, AOISDN2 und AOISDN3 der Berechtigungsorganisationen AO1, AO3 und AO3. Wird der Mobilteilnehmer MSUB1 beispielsweise durch die Berechtigungsorganisationen AO1 und AO2 zur Überwachung bestimmt, so erfolgt ein Eintrag der internationalen Mobilteilnehmerrufnummer MSISDN1 des Mobilteilnehmers MSUB1 in die Abhördatei SF der Datenbasis IU in der Mobilvermittlungsstelle MSC1. Bei jedem Verbindungsaufbauversuch von/zu einer dem Mobilfunksystem zugehörigen Mobilstation werden die Einträge in der Abhördatei SF überprüft, ob derjenige Mobilteilnehmer zur Überwachung bestimmt wurde oder nicht.

Ist beispielsweise der Mobilteilnehmer MSUB1, wie vorausgehend beschrieben, zur Überwachung bestimmt, so erfolgt anhand der Korrespondenztabelle MLT eine Ermittlung, ob die Berechtigungsorganisationen AO1 und AO2 zum Abhören der Kommunikationsverbindung in dem durch die Bereichskennung LAC1... identifizierten geographischen Teilgebiet, in dem sich der Mobilteilnehmers MSUB1 befindet, berechtigt sind.

Liegt die Berechtigung vor, werden der internationalen Mobilteilnehmerrufnummer MSISDN1 in der Abhördatei SF die Berechtigungsorganisationskennungen AOISDN1 und AOISDN2 der Berechtigungsorganisationen AO1 und AO2 zugeordnet. Die über die Kommunikationsverbindung übertragenen Informationen wie auch die Signalisierungsinformationen für den Verbindungsaufbau werden daraufhin in der Aufzeichnungseinrichtung MD in der Mobilvermittlungsstelle MSC1 aufgezeichnet und nach Auslösen der Kommunikationsverbindung anhand der Berechtigungsorganisationskennungen AOISDN1 und AOISDN2 zu den Berechtigungsorganisationen AO1 und AO2 vermittelt und übertragen.

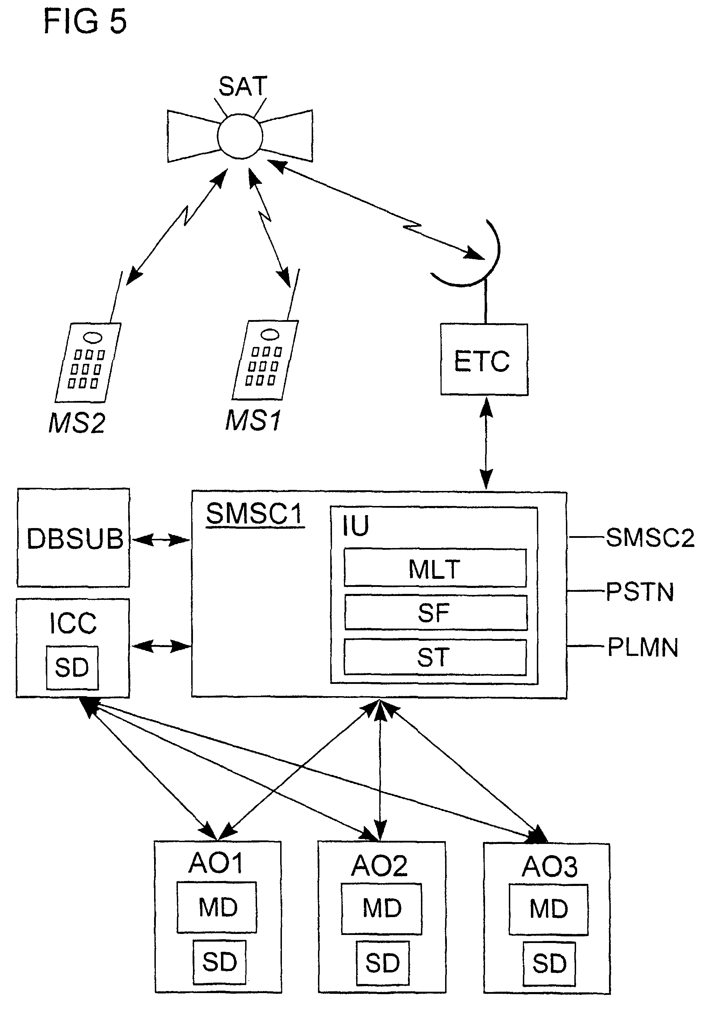

Die FIG 5 zeigt in Verbindung mit den FIG 2, 3 und 6 ein weiteres Ausführungsbeispiel der Erfindung. Hierbei ist die Mobilvermittlungsstelle MSC1 als eine Satelliten-Mobilvermittlungsstelle SMSC1 verwirklicht und mit einer Bodenstation ETC verbunden, die über beispielsweise eine Parabolantenne in Funkkontakt mit einem Satelliten SAT ist. Die weitere Beschreibung läßt sich jedoch auch auf ein beschriebenes terrestrisches Mobilfunksystem anwenden.

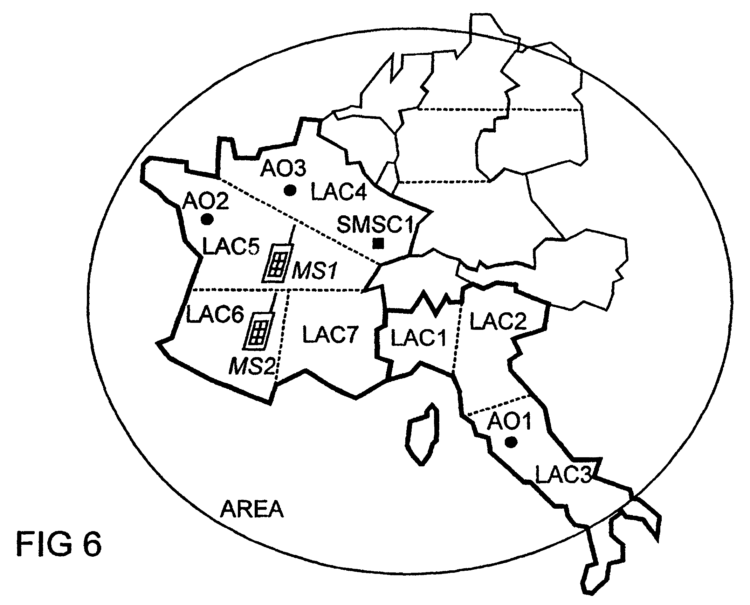

Der Satellit SAT versorgt ein terrestrisches geographisches Gebiet AREA mit funktechnischen Ressourcen, wie es beispielhaft in der FIG 6 dargestellt ist. Das geographische Gebiet AREA ist, vergleichbar mit den Funkzellen bei terrestrischen Mobilfunksystemen, in geographische Teilgebiete aufgeteilt, die durch unterschiedliche Bereichskennungen LAC1... unterschieden werden.

Nach der FIG 6 befinden sich die erste Mobilstation MS1 und eine zweite Mobilstation MS2 zweier Mobilteilnehmer MSUB1 und MSUB2 in dem Funkversorgungsbereich AREA des Satelliten SAT, wobei sich die erste Mobilstation MS1 in dem geographischen Teilgebiet befindet, das durch die Bereichskennung LAC5, und die zweite Mobilstation MS2 in dem geographischen Teilgebiet, das durch die Bereichskennung LAC6 identifiziert wird. Die geographischen Teilgebiete mit den Bereichskennungen LAC4 bis LAC7 entsprechen in diesem Beispiel dem französischen Hoheitsgebiet. Diesen geographischen Teilgebieten sind die beiden Berechtigungsorganisationen AO2 und AO3 zugeordnet, wie aus den Zeilen 2 und 3 in der Korrespondeztabelle MLT der FIG 2 ersichtlich ist. Das benachbarte italienische Hoheitsgebiet ist durch die Bereichskennungen LAC1 bis LAC3 in der Korrespondenztabelle MLT definiert, denen die Berechtigungsorganisation AO1 zugeordnet ist.

Die Satelliten-Mobilvermittlungsstelle SMSC1 befindet sich beispielhaft in dem geographischen Teilgebiet mit der Bereichskennung LAC4, wobei jeder andere Aufstellungsort ebenfalls denkbar wäre.

Die durch die Bereichskennungen LAC5 und LAC6 jeweils spezifizierten Aufenthaltsorte der ersten MS1 und zweiten Mobilstation MS2 sind nach der FIG 5 in einer mit der Satelliten-Mobilvermittlungsstelle SMSC1 verbundenen Teilnehmerdatenbasis DBSUB gespeichert. Weiterhin ist die Satelliten-Mobilvermittlungsstelle SMSC1 mit einem Abhöverwaltungszentrum ICC verbunden, welches wiederum mit den Berechtigungsorganisationen AO1, AO2 und AO3 verbunden ist. Die Aufgabe des Abhörverwaltungszentrums ICC besteht aus der Initialisierung und Verwaltung der Parameter in der Korrespondeztabelle MLT, in der Abhördatei SF und in einem Abhörreport ST sowie der Ermittlung der Berechtigung zum Abhören der Kommunikationsverbindungen.

Die Berechtigungsorganisationen AO1 und AO2 bestimmen gemeinsam den ersten Mobilteilnehmer MSUB1 zur Überwachung in den Hoheitsgebieten Frankreichs und Italiens. Die Bestimmung zur Überwachung kann allerdings auch von einer dritten, beispielsweise internationalen Berechtigungsorganisation erfolgen, wobei die Berechtigungsorganisationen AO1 und AO2 in diesem Fall von der internationalen Berechtigungsorganisation für die Aufzeichnung der Informationen ausgewählt würden. Die Berechtigungsorganisation AO3 bestimmt den zweiten Mobilteilnehmer MSUB2 zur Überwachung.

Als Folge der Bestimmung zur Überwachung werden die internationalen Mobilteilnehmerrufnummern MSISDN1 und MSISDN2 der ersten MS1 und zweiten Mobilstation MS2 in die linde Spalte der Abhördatei eingetragen. Der Eintrag in die Abhördatei SF kann direkt von den Berechtigungsorganisationen AO1, AO2 und AO3, oder über das Abhörverwaltungszentrum ICC erfolgen.

Unternehmen nun im folgenden die beiden Mobilteilnehmer MSUB1 und MSUB2 mit ihren Mobilstationen MS1 und MS2 Verbindungsaufbauversuche zu weiteren Teilnehmern (nicht eingezeichnet), beispielsweise eines terrestrischen Mobilfunknetzes oder Fernsprechnetzes, so werden nach der in der FIG 4 beschriebenen Prozedur jeweils für die Berechtigungsorganisationen AO1, AO2 und AO3 die Berechtigungen zum Abhören ermittelt. Die Ermittlung in der Korrespondenztabelle MLT kann von dem Abhörverwaltungszentrum ICC oder automatisch in der Satelliten-Mobilvermittlungsstelle SMSC1 unter Verwendung der Bereichskennungen LAC5 und LAC6 der Aufenthaltsorte der beiden Mobilteilnehmer MSUB1 und MSUB2 in der Teilnehmerdatenbasis DBSUB, durchgeführt werden. Nach bestätigter Berechtigung werden die jeweiligen Berechtigungsorganisationskennungen AOISDN1 und AOISDN2 bzw. AOISDN3 den jeweiligen internationalen Mobilteilnehmerrufnummern MSISDN1 bzw. MSISDN2 der beiden Mobilteilnehmer MSUB1 und MSUB2 in der Abhördatei SF zugeordnet.

In der Satelliten-Mobilvermittlungsstelle SMSC1 werden daraufhin Stichleitungen gesetzt bzw. Parallelschleifen in den Verbindungsaufbau eingeschleift, über die die übertragenen Informationen auf den Kommunikationsverbindungen abgehört werden können. In dem Ausführungsbeispiel der FIG 5 werden die aufzuzeichnenden Informationen anhand der Berechtigungsorganisationskennungen AOISDN1 bzw. AOISDN2 und AOISDN3 direkt zu den jeweiligen Berechtigungsorganisationen AO1 und AO2 bzw. AO3 vermittelt und dort in jeweils einer Aufzeichnungseinrichtung MD aufgezeichnet.

In der Datenbasis IU der Satelliten-Mobilvermittlungsstelle SMSC1 wird für die beiden Mobilstationen MS1 und MS2 jeweils ein Abhörreport ST gespeichert. Dieser Abhörreport ST kann beispielsweise teilnehmer- und verbindungsrelevante Informationen wie beispielsweise Teilnehmeridentität, Datum und Uhrzeit, Verbindungstyp (abgehende (MOC) oder ankommende (MTC) Verbindung) oder auch die Rufnummer bei Anrufumlenkung sofort (CFU) enthalten. Der jeweils gespeicherte Abhörreport ST wird direkt zu den Berechtigungsorganisationen AO1 und AO2 bzw. AO3 übertragen und dort in einer Speichereinrichtung SD gespeichet, oder zu dem Abhörverwaltungszentrum ICC übertragen und dort in einer Speichereinrichtung SD gespeichet, von dem aus eine Übertragung wiederum zu den Berechtigungsorganisationen AO1 und AO2 bzw. AO3 stattfinden kann.

Der Abhörvorgang der Informationen über die Kommunikationsverbindung zu der ersten Mobilstation MS1 kann derart ablaufen, daß beispielsweise die abgehenden Informationen in der ersten Berechtigungsorganisation AO1 und die ankommenden Informationen in der zweiten Berechtigungsorganisation AO2 aufgezeichnet werden.

| Bezugszeichenliste | | | |
|---|---|---|---|
| **Nr.** | **Begriff** | **Abkürzung** | **Englisch** |
| 1 | Berechtigungsorgansation | AO | Authorisation Organisation |
| 2 | Berechtigungsorganisationskennung | AOISDN | Authorisation Organisation ISDN-Number |
| 3 | geographisches Gebiet | AREA | Area |
| 4 | Basisstation | BS | Base Station |
| 5 | Teilnehmerdatenbasis | DBSUB | Data Base SUBscriber |
| 6 | Bodenstation | ETC | Earth Terminal Controller |
| 7 | Heimatdatei | HLR | Home Location Register |
| 8 | Abhörverwaltungszentrum | ICC | Interception Control Center |
| 9 | Datenbasis | IU | Interception Unit |
| 10 | Bereichskennung | LAC | Local Area Code |
| 11 | Aufzeichnungseinrichtung | MD | Monitoring Device |
| 12 | Korrespondenztabelle | MLT | MC-LAC-Table |
| 13 | Mobilvermittlungsstelle | MSC | Mobile Switching Center |
| 14 | int. Mobilteilnehmerrufnummer | MSISDN | Mobile Subscriber ISDN-Number |
| 15 | Mobilteilnehmer | MSUB | Mobile SUBscriber |
| 16 | Öffentliches Mobilfunknetz | PLMN | Public Land Mobile Network |
| 17 | Öffentliches Fernsprechnetz | PSTN | Public Switched Telephone Network |
| 18 | Einrichtung zur Zuteilung funktechnischer Ressourcen | RNM | Radio Network Management |
| 19 | Satellit | SAT | Satellite |
| 20 | Speichereinrichtung | SD | Storing Device |
| 21 | Abhördatei | SF | S-File / Supervision File |
| 22 | Satelliten-Mobilvermittlungsstelle | SMSC | Satellite Mobile Switching Center |
| 23 | Abhörreport | ST | S-Ticket / Supervision Ticket |
| 24 | Besucherdatei | VLR | Visitor Location Register |

## Patentansprüche

1. Verfahren zum Abhören von Kommunikationsverbindungen in einem Mobilfunksystem, das
- zumindest einer Mobilvermittlungsstelle (MSC1), die mit weiteren Mobilvermittlungsstellen (MSC2...) vernetzt ist und/oder einen Zugang zu anderen Kommunikationsnetzen (PSTN, PLMN) ermöglicht,
- zumindest eine Einrichtung (RNM) zur Zuteilung funktechnischer Ressourcen, die innerhalb eines geographischen Teilgebietes funktechnische Ressourcen zu Kommunikationsverbindungen zuweist, sowie
- zumindest eine mit der Einrichtung (RNM) verbundene Basisstation (BS) zum Senden und Empfangen von Informationen über eine Kommunikationsverbindung zu/von zumindest einer ersten Mobilstation (MS1) eines Mobilteilnehmers (MSUB1),
aufweist, bei dem
- in einer Datenbasis (IU) der Mobilvermittlungsstelle (MSC1) eine Korrespondenztabelle (MLT) gespeichert wird, in der jeweils einer Berechtigungsorganisationskennung (AOISDN1...) einer regionalen, nationalen oder internationalen Berechtigungsorganisation (AO1...) zumindest eine Bereichskennung (LAC1...) eines geographischen Teilgebietes zugeordnet wird,
- in der Datenbasis (IU) eine Abhördatei (SF) gespeichert wird, in der eine internationale Mobilteilnehmerrufnummer (MSISDN1) des durch eine oder mehrere Berechtigungsorganisationen (AO1...) zur Überwachung bestimmten Mobilteilnehmers (MSUB1) eingetragen wird,
- bei einem Verbindungsaufbauversuch von/zu der ersten Mobilstation (MS1) des Mobilteilnehmers (MSUB1) anhand der Korrespondenztabelle (MLT) ermittelt wird, ob die jeweiligen Berechtigungsorganisationen (AO1...) in dem durch die Bereichskennung (LAC1...) identifizierten geographischen Teilgebiet, in dem sich der Mobilteilnehmer (MSUB1) aufhält, zum Abhören der Kommunikationsverbindung berechtigt sind,
- die Berechtigungsorganisationskennungen (AOISDN1...) der internationalen Mobilteilnehmerrufnummer (MSISDN1) in der Abhördatei (SF) zugeordnet werden, wenn die Berechtigung zum Abhören vorliegt, und
- die über die Kommunikationsverbindung von der ersten Mobilstation (MS1) gesendeten und/oder empfangenen Informationen von zumindest einer Aufzeichnungseinrichtung (MD) aufgezeichnet werden.

2. Verfahren nach Anspruch 1, bei dem
die in der Mobilvermittlungsstelle (MSC1) aufgezeichneten Informationen nach einem Auslösen der Kommunikationsverbindung zu den durch die Berechtigungsorganisationskennungen (AOISDN1...) identifizierten jeweiligen Berechtigungsorganisationen (AO1...) vermittelt und übertragen werden.

3. Verfahren nach Anspruch 1, bei dem
die Informationen von der Mobilvermittlungsstelle (MSC1) zu den durch die Berechtigungsorganisationskennungen (AOISDN1...) identifizierten jeweiligen Berechtigungsorganisationen (AO1...) umgelenkt und dort in der jeweils verwirklichten Aufzeichnungseinrichtung (MD) aufgezeichnet werden.

4. Verfahren nach einem vorhergehenden Anspruch, bei dem von einem mit der Mobilvermittlungsstelle (MSC1) verbundenen Abhörverwaltungszentrum (ICC) die Parameter in der Korrespondenztabelle (MLT) und in der Abhördatei (SF) initialisiert und verwaltet werden.

5. Verfahren nach einem vorhergehenden Anspruch, bei dem die Berechtigung zum Abhören der Informationen auf der Kommunikationsverbindung bei einem Eintritt des Mobilteilnehmers (MSUB1) in ein anderes geographisches Teilgebiet (LAC1...) oder periodisch in vordefinierten Zeitintervallen ermittelt wird.

6. Verfahren nach einem vorhergehenden Anspruch, bei dem in der Datenbasis (IU) zumindest ein Abhörreport (ST) mit teilnehmer- und verbindungsrelevanten Informationen für die in der Abhördatei (SF) eingetragene internationale Mobilteilnehmerrufnummer (MSISDN1) gespeichert wird.

7. Verfahren nach dem vorhergehenden Anspruch, bei dem der Abhörreport (ST) zu den jeweiligen nationalen oder internationalen Berechtigungsorganisationen (AO1...) und/oder zu dem Abhörverwaltungszentrum (ICC) übertragen und dort in jeweils einer Speichereinrichtung (SD) gespeichert wird.

8. Verfahren nach einem vorhergehenden Anspruch, bei dem für den Fall, daß dem Mobilteilnehmer (MSUB1) keine Bereichskennung (LAC1...) zugeordnet werden kann, die Berechtigung zum Abhören der Kommunikationsverbindung für die zuletzt bekannte Bereichskennung (LAC1...) ermittelt wird.

9. Verfahren nach einem vorhergehenden Anspruch, das in einem satellitengestützten Mobilfunksystem durchgeführt wird, wobei die Mobilvermittlungsstellen (MSC1, MSC2) als Satelliten-Mobilvermittlungsstellen (SMSC1, SMSC2) ausgestaltet sind, die über jeweils zumindest eine Bodenstation (ETC) Funksignale zu/von einem Satelliten (SAT) senden und empfangen, wobei der Satellit (SAT) ein geographisches Gebiet (AREA) mit funktechnischen Ressourcen versorgt.

10. Anordnung zum Abhören von Kommunikationsverbindungen in einem Mobilfunksystem, mit
- zumindest einer Mobilvermittlungsstelle (MSC1), die mit weiteren Mobilvermittlungsstellen (MSC2...) vernetzt ist und/oder einen Zugang zu anderen Kommunikationsnetzen (PSTN, PLMN) ermöglicht,
- zumindest eine Einrichtung (RNM) zur Zuteilung funktechnischer Ressourcen, die innerhalb eines geographischen Teilgebietes funktechnische Ressourcen zu Kommunikationsverbindungen zuweist, sowie
- zumindest eine mit der Basisstations-Steuerung (BSC) verbundene Basisstation (BS) zum Senden und Empfangen von Informationen über eine Kommunikationsverbindung zu/von zumindest einer ersten Mobilstation (MS1) eines Mobilteilnehmers (MSUB1),
- einer Korrespondenztabelle (MLT), die in einer Datenbasis (IU) der Mobilvermittlungsstelle (SMSC1) gespeichert ist und in der jeweils einer Berechtigungsorganisationskennung (AOISDN1...) einer regionalen, nationalen oder internationalen Berechtigungsorganisation (AO1...) zumindest eine Bereichskennung (LAC1...) eines geographischen Teilgebietes zugeordnet ist,
- einer Abhördatei (SF), die in der Datenbasis (IU) gespeichert ist und in der eine internationale Mobilteilnehmerrufnummer (MSISDN1) des durch eine oder mehrere Berechtigungsorganisationen (AO1...) zur Überwachung bestimmten Mobilteilnehmers (MSUB1) eingetragen ist, und
- zumindest einer Aufzeichnungseinrichtung (MD) zur Aufzeichnung der über die Kommunikationsverbindung von der ersten Mobilstation (MS1) gesendeten und/oder empfangenen Informationen.

11. Anordnung nach Anspruch 10, mit
einem mit der Mobilvermittlungsstelle (MSC1) und den Berechtigungsorganisationen (AO1...) verbundenen Abhörverwaltungszentrum (ICC), das die Parameter in der Korrespondenztabelle (MLT) und in der Abhördatei (SF) initialisiert und verwaltet.

12. Anordnung nach einem der Ansprüche 10 oder 11, bei der die Aufzeichnungseinrichtung (MD) in der Mobilvermittlungsstelle (SMSC1) oder jeweils in den Berechtigungsorganisationen (AO1...) verwirklicht ist.

13. Anordnung nach einem der Ansprüche 10 bis 12, mit zumindest einem in der Datenbasis (IU) gespeicherten Abhörreport (ST) mit teilnehmer- und verbindungsrelevanten Informationen für die in der Abhördatei (SF) eingetragene internationale Mobilteilnehmerrufnummer (MSISDN1).

14. Anordnung nach Anspruch 13, mit
einer Speichereinrichtung (SD) zum Speichern des von der Datenbasis (IU) übertragenen Abhörreports (ST), die jeweils in den Berechtigungsorganisationen (AO1...) oder in dem Abhörverwaltungszentrum (ICC) verwirklicht ist.

15. Anordnung nach einem der Ansprüche 10 bis 14, mit einer mit der Mobilvermittlungsstelle (MSC1) verbundenen Teilnehmerdatenbasis (DBSUB), in der die Bereichskennung (LAC1...) des geographischen Teilgebietes, in dem sich der Mobilteilnehmer (MSUB1) mit der ersten Mobilstation (MS1) aufhält, gespeichert ist.

16. Anordung nach einem der Anspruch 10 bis 15,
für ein satellitengestützten Mobilfunksystem, wobei die Mobilvermittlungsstellen (MSC1, MSC2) als Satelliten-Mobilvermittlungsstellen (SMSC1, SMSC2) ausgestaltet sind, die über jeweils zumindest eine Bodenstation (ETC) Funksignale zu/von einem Satelliten (SAT) senden und empfangen, wobei der Satellit (SAT) ein geographisches Gebiet (AREA) mit funktechnischen Ressourcen versorgt.

## Claims

1. Method for monitoring communications links in a mobile radio system, which
- has at least one mobile switching centre (MSCI), which is networked with further mobile switching centres (MSC2...) and/or allows access to other communications networks (PSTN, PLMN),
- has at least one radio network management device (RNM), which assigns radio resources to communications links within a geographical subarea, and
- at least one base station (BS), which is connected to the device (RNM), for transmitting and receiving information via a communications link to/from at least one first mobile station (MS1) of a mobile subscriber (MSUB1),
in which
- an MC-LAC table is stored in an interception unit (IU) in the mobile switching centre (MSC1), in which table at least one local area code (LAC1...) of a geographical subarea is assigned to each authorization organization ISDN number (AOISDN1...) of a regional, national or international authorization organization (AO1...),
- a supervision file (SF) is stored in the interception unit (IU), in which file an international mobile subscriber ISDN number (MSISDN1) is entered for the mobile subscriber (MSUB1) who is intended to be monitored by one or more authorization organizations (AO1...),
- if an attempt is made to set up a connection from/to the first mobile station (MS1) of the mobile subscriber (MSUB1), the MC-LAC table (MLT) is used to determine whether the respective authorization organizations (AO1...) are authorized to monitor the communications link in the geographical subarea identified by the local area code (LAC1...) and in which the mobile subscriber (MSUB1) is located,
- the authorization organization ISDN numbers (AOISDN1...) are assigned to the international mobile subscriber ISDN numbers (MSISDN1) in the supervision file (SF) when the authorization for monitoring exists, and
- the information transmitted from and/or received by the first mobile station (MS1) via the communications link is recorded by at least one monitoring device (MD).

2. Method according to Claim 1, in which,
once the communications link has been cleared, the information recorded in the mobile switching centre (MSC1) is switched and transmitted to the respective authorization organizations (AO1...) identified by the authorization organization ISDN numbers (AOISDN1...).

3. Method according to Claim 1, in which
the information is diverted from the mobile switching centre (MSC1) to the respective authorization organizations (AO1...) identified by the authorization organization ISDN numbers (AOISDN1...), where it is recorded in the respective monitoring device (MD).

4. Method according to any preceding claim, in which
the parameters in the MC-LAC table (MLT) and in the supervision file (SF) are initialized and administered by an interception control centre (ICC) which is connected to the mobile switching centre (MSC1).

5. Method according to any preceding claim, in which
the authorization to monitor the information on the communications link is determined when the mobile subscriber (MSUB1) enters another geographical subarea (LAC1...), or periodically at predefined time intervals.

6. Method according to any preceding claim, in which
at least one supervision ticket (ST) with subscriber-relevant and connection-relevant information for the international mobile subscriber ISDN number (MSISDN1) entered in the supervision file (SF) is stored in the interception unit (IU).

7. Method according to the preceding claim, in which
the supervision ticket (ST) is transmitted to the respective national or international authorization organizations (AO1...) and/or to the interception control centre (ICC), where it is stored in each case one storage device (SD).

8. Method according to any preceding claim, in which,
in the situation where no local area code (LAC1...) can be assigned to the mobile subscriber (MSUB1), the authorization to monitor the communications link is determined for the most recently known local area code (LAC1...).

9. Method according to any preceding claim, which is carried out in a satellite-based mobile radio system, in which case the mobile switching centres (MSC1, MSC2) are in the form of satellite mobile switching centres (SMSC1, SMSC2) which transmit and receive radio signals to/from a satellite (SAT) via in each case at least one earth terminal controller (ETC), and in which case the satellite (SAT) supplies a geographical area (AREA) with radio resources.

10. Arrangement for monitoring communications links in a mobile radio system, having
- at least one mobile switching centre (MSCI), which is networked with further mobile switching centres (MSC2...) and/or allows access to other communications networks (PSTN, PLMN),
- at least one radio network management device (RNM), which assigns radio resources to communications links within a geographical subarea, and
- at least one base station (BS), which is connected to the base station controller (BSC), for transmitting and receiving information via a communications link to/from at least one first mobile station (MS1) of a mobile subscriber (MSUB1),
- an MC-LAC table (MLT) which is stored in an interception unit (IU) in the mobile switching centre (SMSC1) and in which at least one local area code (LAC1...) of a geographical subarea is assigned to each authorization organization ISDN number (AOISDN1...) of a regional, national or international authorization organization (AO1...),
- a supervision file (SF) which is stored in the interception unit (IU), in which file an international mobile subscriber ISDN number (MSISDN1) is entered for the mobile subscriber (MSUB1) who is intended to be monitored by one or more authorization organizations (AO1...), and
- at least one monitoring device (MD) for recording the information transmitted from and/or received by the first mobile station (MS1) via the communications link.

11. Arrangement according to Claim 10, having
an interception control centre (ICC) which is connected to the mobile switching centre (MSC1) and to the authorization organizations (AO1...) and which initializes and administers the parameters in the MC-LAC table (MLT) and in the supervision file (SF).

12. Arrangement according to one of Claims 10 or 11, in which
the monitoring device (MD) is provided in the mobile switching centre (SMSC1) or in each of the authorization organizations (AO1...).

13. Arrangement according to one of Claims 10 to 12, having
at least one supervision ticket (ST), which is stored in the interception unit (IU) and has subscriber-relevant and connection-relevant information for the international mobile subscriber ISDN number (MSISDN1) entered in the supervision file (SF).

14. Arrangement according to Claim 13, having
a storage device (SD) for storing the supervision ticket (ST) transmitted by the interception unit (IU), which storage device (SD) is provided in each of the authorization organizations (AO1...) or in the interception control centre (ICC).

15. Arrangement according to one of Claims 10 to 14, having
a Data Base Subscriber (DBSUB) which is connected to the mobile switching centre (MSC1) and in which the local area code (LAC1...) of the geographical subarea in which the mobile subscriber (MSUB1) with the first mobile station (MS1) is located is stored.

16. Arrangement according to one of Claims 10 to 15,
for a satellite-based mobile radio system, in which case the mobile switching centres (MSC1, MSC2) are in the form of satellite mobile switching centres (SMSC1, SMSC2) which transmit and receive radio signals to/from a satellite (SAT) via in each case at least one earth terminal control (ETC), in which case the satellite (SAT) supplies a geographical area (AREA) with radio resources.

## Revendications

1. Procédé permettant l'écoute clandestine de communications dans un système téléphonique mobile, qui présente
- au moins un centre de commutation mobile (MSC1) qui est relié en réseau à d'autres centres de commutation mobiles (MSC2...) et/ou qui permet un accès à d'autres réseaux de communication (PSTN, PLMN),
- au moins un dispositif (RNM) pour l'assignation de ressources radiotechniques, qui affecte des ressources radiotechniques à des communications dans une zone géographique, ainsi qu'
- au moins une station de base (BS) raccordée au dispositif (RNM) pour l'émission et la réception d'informations par l'intermédiaire d'une communication vers/depuis au moins un premier poste mobile (MS1) d'un abonné mobile (MSUB1),
dans lequel :
- un tableau de correspondance (MLT) est mémorisé dans une base de données (IU) du centre de commutation mobile (MSC1), dans lequel tableau au moins une identification de zone (LAC1) d'une zone géographique est respectivement attribuée à une identification d'organisation d'autorisation (AOISDN1...) d'une organisation d'autorisation (AO1..) régionale, nationale ou internationale,
- un fichier d'écoute (SF), dans lequel est inscrit un numéro d'appel international d'un abonné mobile (MSISDN1) de l'abonné mobile (MSUB1) destiné à être surveillé par une ou plusieurs organisations d'autorisation (AO1...), est mémorisé dans la base de données (IU),
- lors d'un essai d'établissement de communication depuis/vers le premier poste mobile (MS1) de l'abonné mobile (MSUB1), on détermine à l'aide du tableau de correspondance (MLT) si les organisations d'autorisation respectives (AO1...) dans la zone géographique identifiée par l'identification de zone (LAC1...), dans laquelle séjourne l'abonné mobile (MSUB1), sont autorisées pour l'écoute clandestine de la communication,
- les identifications d'organisation d'autorisation (AOISDN1..) sont attribuées au numéro d'appel international de l'abonné mobile (MSISDN1) dans le fichier d'écoute (SF) lorsque l'autorisation est soumise à l'écoute clandestine, et
- les informations envoyées et/ou reçues par le premier poste mobile (MS1) par l'intermédiaire de la communication sont enregistrées par au moins un dispositif d'enregistrement (MD).

2. Procédé selon la revendication 1, dans lequel les informations enregistrées dans le centre de commutation mobile (MSC1) sont reliées et transmises, après un déclenchement de la communication, aux organisations d'autorisation (AO1...) respectives identifiées par les identifications d'organisation d'autorisation (AOISDN1...).

3. Procédé selon la revendication 1, dans lequel les informations sont retoumées du centre de commutation mobile (MSC1) vers les organisations d'autorisation (AO1...) respectives identifiées par les identifications d'organisation d'autorisation (AOISDN1...), et y sont enregistrées dans le dispositif d'enregistrement (MD) respectivement mis en oeuvre.

4. Procédé selon l'une des revendications précédentes, dans lequel les paramètres sont initialisés et gérés dans le tableau de correspondance (MLT) et le fichier d'écoute (SF) par un centre de gestion des écoutes (ICC) raccordé au centre de commutation mobile (MSC1).

5. Procédé selon l'une des revendications précédentes, dans lequel l'autorisation de l'écoute des informations sur la communication est déterminée lors d'une entrée de l'abonné mobile (MSUB1) dans une autre zone géographique (LAC1...) ou périodiquement à des intervalles de temps prédéfinis.

6. Procédé selon l'une des revendications précédentes, dans lequel au moins un rapport d'écoute (ST), avec les informations concemant l'abonné et la communication pour le numéro d'appel international de l'abonné mobile (MSISDN1) inscrit dans le fichier d'écoute (SF), est mémorisé dans la base de données (IU).

7. Procédé selon la revendication précédente, dans lequel le rapport d'écoute (ST) est transmis aux organisations d'autorisation (AO1...) nationales ou internationales respectives et/ou au centre de gestion des écoutes (ICC) et y est mémorisé dans un dispositif de mémorisation (SD).

8. Procédé selon l'une des revendications précédentes, dans lequel l'autorisation pour l'écoute de la communication est déterminée pour l'identification de zone (LAC1...) connue en dernier au cas où aucune identification de zone (LAC1...) ne peut être attribuée à l'abonné mobile (MSUB1).

9. Procédé selon l'une des revendications précédentes, mis en oeuvre dans un système téléphonique mobile par satellite, les centres de commutation mobiles (MSC1, MSC2) étant développés comme des centres de commutation mobiles par satellite (SMSC1, SMSC2) qui émettent et reçoivent des signaux radio vers/depuis un satellite (SAT) par l'intermédiaire d'au moins une station au sol (ETC), le satellite (SAT) alimentant une région géographique avec des ressources radiotechniques.

10. Configuration permettant l'écoute clandestine de communications dans un système téléphonique mobile, dotée de :
- au moins un centre de commutation mobile (MSC1) qui est relié en réseau à d'autres centres de commutation mobiles (MSC2...) et/ou qui permet un accès à d'autres réseaux de communication (PSTN, PLMN),
- au moins un dispositif (RNM) pour l'assignation de ressources radiotechniques, qui affecte des ressources radiotechniques à des communications dans une zone géographique, ainsi que de
- au moins une station de base (BS) raccordée à la commande de station de base (BSC) pour l'émission et la réception d'informations par l'intermédiaire d'une communication vers/depuis au moins un premier poste mobile (MS1) d'un abonné mobile (MSUB1),
- un tableau de correspondance (MLT) mémorisé dans une base de données (IU) du centre de commutation mobile (SMSC1), dans lequel tableau au moins une identification de zone (LAC1...) d'une zone géographique est respectivement attribuée à une identification d'organisation d'autorisation (AOISDN1...) d'une organisation d'autorisation (AO1..) régionale, nationale ou internationale,
- un fichier d'écoute (SF) mémorisé dans la base de données (IU), et dans lequel est inscrit un numéro d'appel international d'un abonné mobile (MSISDN1) de l'abonné mobile (MSUB1) destiné à être surveillé par une ou plusieurs organisations d'autorisation (AO1...), est mémorisé dans la base de données (IU),
- au moins un dispositif d'enregistrement (MD) pour enregistrer les informations envoyées et/ou reçues par le premier poste mobile (MS1) par l'intermédiaire de la communication.

11. Configuration selon la revendication 10, dotée d'un centre de gestion des écoutes (ICC), relié au centre de commutation mobile (MSC1) et aux organisations d'autorisation (AO1...), qui initialise et gère les paramètres dans le tableau de correspondance (MLT) et dans le fichier d'écoute (SF).

12. Configuration selon l'une des revendications 10 ou 11, dans laquelle le dispositif d'enregistrement (MD) est mis en oeuvre dans le centre de commutation mobile (SMSC1) ou respectivement dans les organisations d'autorisation (AO1...).

13. Configuration selon l'une des revendications 10 à 12, dotée d'au moins un rapport d'écoute (ST), avec les informations concemant l'abonné et la communication pour le numéro d'appel international de l'abonné mobile (MSISDN1) inscrit dans le fichier d'écoute (SF), mémorisé dans la base de données (IU).

14. Configuration selon la revendication 13, dotée d'un dispositif de mémorisation (SD) pour stocker le rapport d'écoute (ST) transmis par la base de données (IU), dispositif qui est mis en oeuvre dans les organisations d'autorisation (AO1...) ou dans le centre de gestion des écoutes (ICC).

15. Configuration selon l'une des revendications 10 à 14, dotée d'une base de données d'abonnés (DBSUB) reliée au centre de commutation mobile (MSC1), dans laquelle est mémorisée l'identification de zone (LAC1...) de la zone géographique où séjourne l'abonné mobile (MSUB1) avec le premier poste mobile (MS1).

16. Configuration selon l'une des revendications 10 à 15, pour un système téléphonique mobile par satellite, les centres de commutation mobiles (MSC1, MSC2) étant développés comme des centres de commutation mobiles par satellite (SMSC1, SMSC2) qui émettent et reçoivent des signaux radio vers/depuis un satellite (SAT) par l'intermédiaire d'au moins une station au sol (ETC), le satellite (SAT) alimentant une région géographique avec des ressources radiotechniques.
